(19) Europäisches Patentamt
European Patent Office
Office européen des brevets

(11) **EP 1 804 492 A2**

(12) **EUROPÄISCHE PATENTANMELDUNG**

(43) Veröffentlichungstag:
**04.07.2007 Patentblatt 2007/27**

(51) Int Cl.:
**H04N 5/44** *(2006.01)*

(21) Anmeldenummer: 06025910.8

(22) Anmeldetag: **14.12.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **30.12.2005 DE 102005063072**

(71) Anmelder: **Micronas GmbH
79108 Freiburg (DE)**

(72) Erfinder: **Niedermaier, Ulrich
81539 München (DE)**

(74) Vertreter: **Patentanwälte
Westphal, Mussgnug & Partner
Mozartstrasse 8
80336 München (DE)**

(54) **Verfahren und Vorrichtung zur Zwischenzeileninterpolation**

(57) Die Erfindung betrifft ein Verfahren und eine Vorrichtung zur Interpolation eines Bildinformationswertes für einen Bildpunkt einer Zwischenzeile. Das Verfahren umfasst:
- Auswählen einer Interpolationsrichtung aus einer Anzahl von Bildrichtungen, denen jeweils ein Richtungsgütewert zugewiesen ist, anhand eines Vergleichs dieser Richtungsgütewerte,
- Ermitteln des zu interpolierenden Bildinformationswertes abhängig von Bildinformationswerten, die Bildpunkten zugeordnet sind, die in der Interpolationsrichtung benachbart zu dem zu interpolierenden Bildpunkt liegen,
und folgende Verfahrensschritten zur Ermittlung eines Richtungsgütewertes für eine Bildrichtung:
- Auswählen einer Bildpunktgruppe, die wenigstens zwei Bildpunkte umfasst,
- Ermitteln jeweils eines Einzel-Richtungsgütewertes für jeden Bildpunkt der Bildpunktgruppe, wobei der Einzel-Richtungsgütewertes abhängig ist von Bildinformationswerten, die Bildbereichen zugeordnet sind, die in der Bildrichtung benachbart zu dem jeweiligen Bildpunkt der Gruppe liegen,
- Erzeugen des Richtungsgütewertes als Funktion der Einzel-Richtungsgütewerte der Bildpunktgruppe.

EP 1 804 492 A2

**EP 1 804 492 A2**

**Beschreibung**

Die Erfindung betrifft ein Verfahren und eine Vorrichtung zur Interpolation eines Bildinformationswertes für einen Bildpunkt einer Zwischenzeile, die zwischen zwei Originalbildzeilen in einem Bild angeordnet ist.

Für die Übertragung von Videobildern bzw. Fernsehbildern ist es bekannt, anstelle von Vollbildern, bei denen zu jedem Bildpunkt des Bildes ein Bildinformationswert vorhanden ist, zeilenverkämmte (interlaced) Halbbilder (fields) zu übertragen. Jedes dieser übertragenen Halbbilder umfasst eine Anzahl Bildzeilen, die jeweils eine Anzahl Bildpunkte umfassen.. Bildinformationswerte, d.h. Helligkeitswerte (Luminanzwerte) oder Farbwerte (Chrominanzwerte) sind dabei nur für die Bildpunkte einer jeden zweiten Zeile vorhanden, wobei abwechselnd Halbbilder übertragen werden bei denen Bildinformationswerte zu Bildpunkten geradzahliger Zeilen und bei denen Bildinformationswerte zu Bildpunkten ungeradzahliger Zeilen vorhanden sind.

Um aus einem solchen übertragenen Halbbild ein Vollbild für die Darstellung auf einer Anzeigevorrichtung, wie einem Bildschirm, zu erzeugen, ist es erforderlich, Bildinformationswerte für die Zwischenzeilen zu interpolieren. Bei sogenannten Intra-Field-Algorithmen werden für die Interpolation eines Bildinformationswertes zu einem Bildpunkt einer Zwischenzeile eines Halbbildes nur Bildinformationswerte von Bildpunkten aus demselben Halbbild verwendet.

Im einfachsten Fall werden die vorhandenen Bildzeilen eines Halbbildes verdoppelt, um ein Vollbild zu erzeugen. Die Bildinformationswerte der Bildpunkte einer auf diese Weise interpolierten Zwischenzeile eines Halbbildes entsprechen dabei den Bildinformationswerten der oberhalb oder unterhalb der Zwischenzeile liegenden Bildzeile. Kanten, die in diagonaler Richtung durch ein darzustellendes Bild verlaufen, erscheinen bei dieser Art der Interpolation in dem Vollbild allerdings "treppenförmig" abgestuft.

Ein Verfahren zur Vermeidung solcher treppenartiger Artefakte in einem aus einem Halbbild erzeugten Vollbild ist beispielsweise in der US 5625421 (Faroudja) beschrieben

Beim sogenannten ELA-Algorithmus (ELA= Edge Based Line Average) wird für jeden zu interpolierenden Bildpunkt die Richtung einer möglichen, diesen Bildpunkt umfassenden Kante ermittelt. Dieser Algorithmus ist beispielsweise beschrieben in T. Doyle, "Interlaced to Sequential Conversion for EDTV Applications" Proc. of 2nd Int. Workshop on Signal Processing of HDTV, L'Aquila, Italy, 1988, oder in T. Doyle, and M Looymans, "Progressive Scan Conversion Using Edge Information" Proc. of 3rd Int. Workshop on HDTV, Torino, Italy, 1989 oder in Lee et al.:"A new Algorithm for interlaced to progressive scan conversion based on directional correlations and its IC design", IEEE Transactions on Consumer Electronics, Volume 40, Number 2, May 1994, Seite 119.

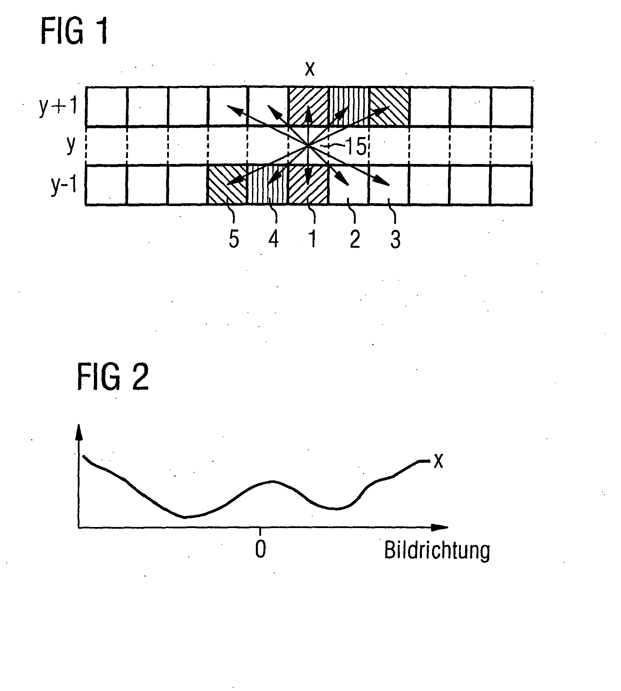

Beim ELA-Algorithmus wird für verschiedene Bildrichtungen die Differenz zwischen den Bildinformationswerten zweier Bildpunkte ermittelt, die in der jeweiligen Richtung benachbart zu dem zu interpolierenden Bildpunkt liegen. Die Richtung, für welche der Betrag dieser Differenz ein Minimum annimmt wird hierbei als Richtung des Kantenverlaufs angenommen. Der Bildinformationswert des zu interpolierenden Bildpunktes wird dann unter Verwendung von Bildpunkten, die in dieser Richtung benachbart zu dem zu interpolierenden Bildpunkt angeordnet sind, interpoliert. Problematisch können bei diesem Vorgehen Mehrdeutigkeiten sein, was nachfolgend anhand der Figuren 1 und 2 erläutert wird.

Figur 1 zeigt einen Ausschnitte mit zwei Originalbildzeilen y-1, y+1 eines matrixartig aufgebauten Halbbildes. Jede dieser Zeilen weist eine Anzahl Bildpunkte auf, denen Bildinformationswerte, beispielsweise Helligkeitswerte, zugeordnet sind. Mit y ist in Figur 1 eine zu interpolierende Zwischenzeile bezeichnet. Betrachtet sei nun ein zu interpolierender Bildpunkt 15 an einer Bildposition (x,y). Die mit den Bezugszeichen 1 bis 5 bezeichneten Pfeile veranschaulichen in Figur 1 verschiedene Bildrichtungen, für welche ein möglicher Verlauf einer Kante untersucht wird. Das Vorhandensein einer Kante in einer Richtung wird dabei dann angenommen, wenn Bildpunkte, die in der jeweiligen Richtung benachbart zu dem zu interpolierenden Bildpunkt 15 liegen, gleiche oder annähernd gleiche Helligkeitswerte besitzen. Wie aus Figur 1 ersichtlich ist, in der die unterschiedlichen Helligkeitswerte der einzelnen Bildpunkte durch unterschiedliche Schraffuren dargestellt sind, können verschiedene Richtungen vorhanden sein, für die dieses Kriterium erfüllt ist. In Figur 1 ist das zuvor erläuterte "Kantenkrierium" für alle der dargestellten fünf Richtungen erfüllt, während die Kante tatsächlich in der durch den Richtungspfeil 4 veranschaulichten Richtung verläuft.

In Figur 2 sind für einen zu interpolierenden Bildpunkt, allgemein Richtungswerte für verschiedene Bildrichtungen aufgetragen. Die einzelnen Richtungswerte entsprechen dabei dem Betrag der Differenz der Bildinformationswerte solcher Originalbildpunkte, die in der jeweiligen Richtung dx benachbart zu dem zu interpolierenden Bildpunkt liegen. Das Vorhandensein einer Kante in einer Bildrichtung ist dabei um so wahrscheinlicher, je kleiner der zugehörige Richtungswert ist. Wie bereits anhand von Figur 1 erläutert wurde, kann der Verlauf der Richtungswerte $q(x,y)$ allerdings Mehrdeutigkeiten in dem Sinn aufweisen, dass die Richtungswerte zu zwei oder mehr Bildrichtungen $dx_1$, $dx_2$ lokale Minima der Kurve bilden, so dass zwei oder mehr Bildrichtungen $dx_1$, $dx_2$ als mögliche Richtungen für Kantenverläufe und damit als mögliche Interpolationsrichtungen in Frage kommen.

Weitere Verfahren zur Interpolation eines Bildinformationswertes sind beschrieben in der US 6,965,705 B1, der EP 0 550 231 A1, der US 2005/0157951 A1, der WO 99/19834 A1, der US 2005/0134602 A1 oder in FAN, YU-CHENG; u.a.: Intellegent Intra-Field Interpolation for Motion Compensated Deinterlacing. In: 3rd International Conference on Information Technology ITRE 2005. 27.-30. Juni 2005, S. 200-203.

Ziel der vorliegenden Erfindung ist es, ein Verfahren und eine Vorrichtung zur Zwischenzeileninterpolation zur Verfügung zu stellen, das/die eine verbesserte Interpolation von durch das Bild verlaufenden Kanten gewährleistet.

Dieses Ziel wird durch ein Verfahren nach Anspruch 1 oder 3 und durch eine Vorrichtung nach Anspruch 23 oder 24 erreicht. Vorteilhafte Ausgestaltungen sind Gegenstand der Unteransprüche.

Das erfindungsgemäße Verfahren zur Interpolation eines Bildinformationswertes für einen Bildpunkt einer Zwischenzeile sieht vor, aus einer Anzahl von Bildrichtungen, denen jeweils ein Richtungsgütewert zugewiesen ist, eine Interpolationsrichtung anhand eines Vergleichs dieser Richtungsgütewerte auszuwählen, und den zu interpolierenden Bildinformationswert abhängig von Bildinformationswerten, die Bildpunkten zugeordnet sind, die in der Interpolationsrichtung benachbart zu dem zu interpolierenden Bildpunkt liegen, zu interpolieren. Für die Ermittlung eines Richtungsgütewertes zu einer Bildrichtung sind dabei folgende Verfahrensschritte vorgesehen:

Ermitteln jeweils eines Einzel-Richtungsgütewertes für jeden Bildpunkt einer Bildpunktgruppe mit wenigstens zwei Bildpunkten, wobei der Einzel-Richtungsgütewert abhängig ist von Bildinformationswerten, die Bildbereichen zugeordnet sind, die in der Bildrichtung benachbart zu dem jeweiligen Bildpunkt der Gruppe liegen,

Erzeugen des Richtungsgütewertes als Funktion der Einzel-Richtungsgütewerte (q) der Bildpunktgruppe.

Der Richtungsgütewert kann dabei insbesondere dem Mittelwert der Einzelgütewerte entsprechen.

Ein Einzel-Richtungsgütewert, der einer Bildrichtung zugewiesen ist, stellt bei dem erfindungsgemäßen Verfahren ein Maß für die Wahrscheinlichkeit dar, dass in dem Bild eine Kante in der jeweiligen Bildrichtung verläuft. Um nun für einen zu interpolierenden Bildpunkt die Wahrscheinlichkeit für das Vorhandensein eines Kantenverlaufs in einer gegebenen Bildrichtung zu ermitteln, werden mehrere solcher, eine Wahrscheinlichkeit für das Vorhandensein eines Kantenverlaufs repräsentierende Einzel-Richtungsgütewerte, aufaddiert und anhand der dadurch erhaltenen (zusammengesetzten) Richtungsgütewerte wird eine Bildrichtung als Interpolationsrichtung ausgewählt. Untersuchungen haben gezeigt, dass durch eine solche Addition der Einzel-Richtungswerte mehrerer benachbart zueinander angeordneter Bildpunkte Mehrdeutigkeiten bei der Ermittlung einer optimalen Bildrichtung vermieden oder zumindest reduziert werden können.

Die vorliegende Erfindung wird nachfolgend anhand von Figuren näher erläutert.

Figur 1     veranschaulicht die Problematik von Mehrdeutigkeiten bei der Ermittlung der Richtung eines Kantenverlaufs in einem Bild bei einem Verfahren nach dem Stand der Technik.

Figur 2     veranschaulicht ebenfalls das Problem von Mehrdeutigkeiten bei der Ermittlung der Richtung eines Kantenverlaufs in einem Bild. Die Figur zeigt für einen zu interpolierenden Bildpunkt den Verlauf von Richtungswerten, die jeweils ein Maß für die Wahrscheinlichkeit eines Kantenverlaufs in einer bestimmten Richtung darstellen.

Figur 3     zeigt ausschnittsweise ein matrixartig aufgebautes Halbbild mit einer Anzahl Originalbildzeilen und einer Anzahl zwischen den Originalbildzeilen zu interpolierender Zwischenzeilen.

Figur 4     veranschaulicht die Vorteile des erfindungsgemäßen Verfahrens anhand des Verlaufs mehrerer EinzelRichtuhgsgütewerte und des Verlaufs von Richtungsgütewerten, die jeweils der Summe der Einzel-Richtungsgütewerte entsprechen.

Figur 5     veranschaulicht die zu einem zu interpolierenden Bildpunkt benachbarten Bildpunkte, deren Einzel-Richtungswerte zur Ermittlung eines Richtungswertes addiert werden, für verschiedene Bildrichtungen des Bildes.

Figur 6     veranschaulicht das Vorgehen bei der Auswahl der zu einem zu interpolierenden Bildpunkt benachbarten Bildpunkte bei Anwendung einer Unterabtastung.

Figur 7     veranschaulicht ein Verfahren zur Ermittlung eines Richtungskorrelationswertes.

Figur 8     veranschaulicht ein Verfahren zur Ermittlung einer Maßzahl für einen "flachen" Verlauf "dünner Kanten".

Figur 9     zeigt eine richtungsabhängige Gewichtungsfunktion.

Figur 10    veranschaulicht eine Vorrichtung zur Ermittlung eines Einzel-Richtungsgütewertes.

Figur 11     veranschaulicht ein Schema zur Zusammenfassung mehrerer Bildrichtungen zu Richtungsklassen.

Figur 12     zeigt beispielhaft den Verlauf von Klassengütewerten, die jeweils einer Richtungsklasse zugeordnet sind.

Figur 13     zeigt schematisch eine Vorrichtung zur Durchführung des erfindungsgemäßen Interpolationsverfahrens.

In den Figuren bezeichnen, sofern nicht anders angegeben, gleiche Bezugszeichen gleiche Bildbereiche mit gleicher Bedeutung.

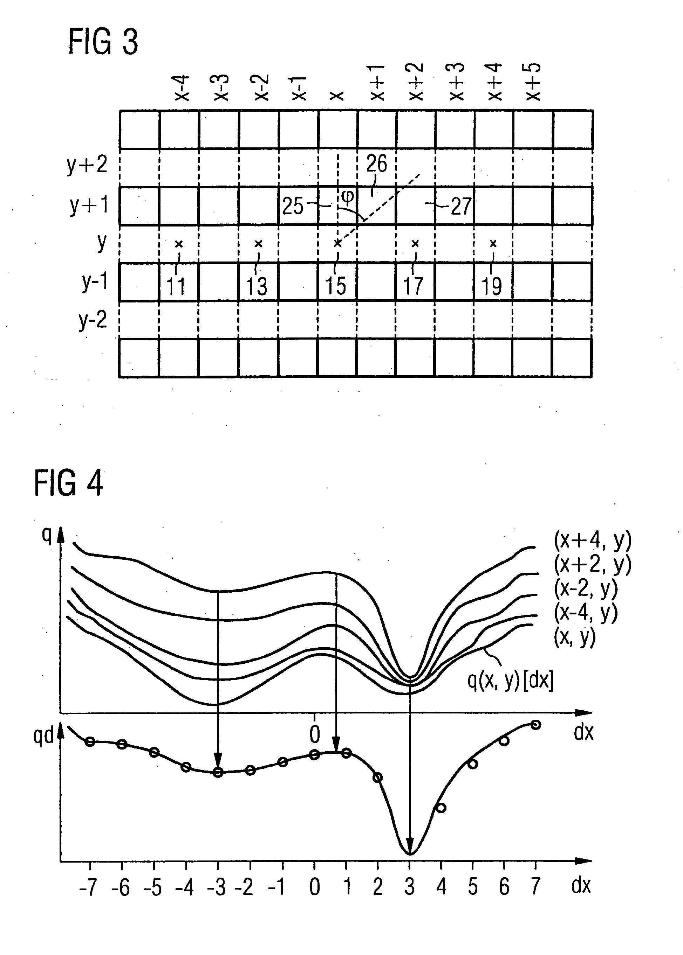

Das erfindungsgemäße Verfahren wird nachfolgend für die Interpolation des Bildinformationswertes eines Bildpunktes einer Zwischenzeile eines Halbbildes erläutert. Figur 3 zeigt schematisch einen Ausschnitt eines solchen Halbbildes, das Originalbildzeilen y-3, y-1, y+1, y+3 aufweist, die jeweils in eine Anzahl Bildpunkte unterteilt sind. Zur Erhöhung der Bildauflösung bzw. zur Verbesserung der Bilddarstellung ist es wünschenswert, zwischen zwei dieser Originalbildzeilen jeweils eine weitere Bildzeile y-2, y, y+2, die nachfolgend als Zwischenzeile bezeichnet wird und die jeweils eine Anzahl Bildpunkte umfasst, zu interpolieren. Die Bildpunkte der Originalbildzeilen sind in Figur 3 als Quadrate mit durchgezogenen Linien dargestellt, während die Bildpunkte der Zwischenzeilen als Quadrate mit teilweise gestrichelten Linien dargestellt sind.

Die Originalbildzeilen y-3, y-1, y+1, y+3 mit den Originalbildpunkten sowie die zu interpolierenden Zwischenzeilen y-2, y, y+2 mit den zu interpolierenden Bildpunkten sind Teil eines Bildes, in dem die Originalbildpunkte und die zu interpolierenden Bildpunkte matrixartig angeordnet sind. Eine erste Richtung dieser Bildpunktmatrix, in der die Bildpunkte einer Zeile benachbart zueinander angeordnet sind, wird nachfolgend als horizontale Bildrichtung oder x-Richtung bezeichnet, während eine zweite Richtung, in der die einzelnen Zeilen jeweils benachbart zueinander angeordnet sind, nachfolgend als Vertikalrichtung oder γ-Richtung bezeichnet wird.

Den Originalbildpunkten, also den Bildpunkten der Originalbildzeilen, sind jeweils Bildinformationswerte zugeordnet, während den zu interpolierenden Bildpunkten, also den Bildpunkten der Zwischenzeilen, solche Bildinformationswerte durch Interpolation der Bildinformationswerte von Originalbildpunkten zuzuordnen sind. Diese Bildinformationswerte können Luminanzwerte oder Chrominanzwerte sein.

In dem in Figur 3 ausschnittsweise dargestellten Bild, das matrixartig angeordnete Bildpunkte umfasst, lassen sich Bildrichtungen definieren. Für die nachfolgende Erläuterung werden diese Bildrichtungen unter Verwendung eines Winkels φ definiert. Der Winkel φ ist dabei der Winkel, um den die jeweilige Bildrichtung von der Vertikalen abweicht. Für den Tangens dieses Winkels gilt:

$$\tan(\varphi) = \frac{dx}{dy} \qquad\qquad\qquad (1).$$

dx bezeichnet dabei den horizontalen Abstand zweier Bildpunkte die in der jeweiligen Bildrichtung benachbart zueinander angeordnet sind, die also auf einer in der Bildrichtung verlaufenden Geraden liegen. dy bezeichnet den vertikalen Abstand zweier Bildpunkte, die auf dieser in der Bildrichtung verlaufenden Geraden liegen. Eine Bildrichtung wird für die nachfolgende Erläuterung für dy = 1 unter Verwendung des horizontalen Abstands dx zweier Bildpunkte, die auf der in der Bildrichtung verlaufenden Geraden liegen, definiert. In diesem Fall gilt:

$$dx = \arctan(\varphi) \qquad\qquad\qquad (2).$$

dx entspricht somit dem horizontalen Abstand zweier Bildpunkte, die in Bildzeilen liegen, die in vertikaler Richtung unmittelbar nebeneinander angeordnet sind, und die auf der die Bildrichtung festlegenden Geraden liegen. dx = 0 definiert die Vertikale. Bezug nehmend auf Figur 3 liegen in dieser vertikalen Richtung beispielsweise der zu interpolierende Bildpunkt 15 und der an der selben horizontalen Position x wie der zu interpolierende Bildpunkt 15 liegende Bildpunkt 25 der Originalbildzeile y-1 benachbart zueinander. Der Richtungswinkel φ beträgt in diesem Fall 0°, da arctan(0) = 0° gilt. dx = 1 bezeichnet eine Bildrichtung, die um den Richtungswinkel φ = 45° von der Vertikalen abweicht. In dieser Richtung liegen beispielsweise der zu interpolierende Bildpunkt 15 und der in der Originalbildzeile y-1 liegende Bildpunkt 26, dessen horizontale Position gegenüber der horizontalen Position des Bildpunktes 15 um dx = 1 verschoben ist, benachbart zueinander.

Die Definition einer Bildrichtung unter Verwendung des horizontalen Abstandes dx ist selbstverständlich nicht auf ganzzahlige Werte von dx beschränkt. So bezeichnet dx = 0,5 beispielsweise eine Bildrichtung, die durch zwei Bildpunkte definiert ist, deren horizontaler Abstand dx = 1 und deren vertikaler dy = 2 beträgt.

Bei dem erfindungsgemäßen Verfahren zur Interpolation eines Bildinformationswertes S(x,y) zu dem zu interpolierenden Bildpunkt 15, der die Koordinaten (x,y) besitzt, ist vorgesehen, eine Gruppe von Bildpunkten auszuwählen, die den zu interpolierenden Bildpunkt umfassen kann. Bezug nehmend auf Figur 3 umfasst diese Gruppe zu interpolierender Bildpunkte beispielsweise die Bildpunkte 11, 13, 17 und 19 und den zu interpolierenden Bildpunkt 15 selbst. Die zu interpolierenden Bildpunkte dieser Gruppe liegen in dem Beispiel alle in derselben Bildzeile y wie der zu interpolierende Bildpunkt 15 selbst und sind in dem Beispiels symmetrisch um diesen zu interpolierenden Bildpunkt 15 angeordnet.

Das erfindungsgemäße Verfahren sieht weiterhin vor, zu jedem dieser Bildpunkte 11, 13, 15, 17, 19 Richtungsgütewerte für verschiedene Bildrichtungen zu ermitteln und diese Richtungsgütewerte zu addieren, um für den zu interpolierenden Bildpunkt 15 zusammengesetzte Richtungsgütewerte für die einzelnen Bildrichtungen zu erhalten.

In Figur 4 sind im oberen Teil beispielhaft die Verläufe der Richtungsgütewerte für verschiedene Bildrichtungen dx für die einzelnen zu interpolierenden Bildpunkte 11, 13, 15, 17, 19 der ausgewählten Gruppe aufgetragen. Die für einen Bildpunkt ermittelten Einzel-Richtungsgütewerte, deren Ermittlung nachfolgend noch erläutert werden wird, stellen jeweils ein Maß für eine Wahrscheinlichkeit dar, das in der jeweiligen Richtung eine Kante durch das Bild verläuft. Für das Beispiel gemäß Figur 4 wird davon ausgegangen, dass die Einzel-Richtungsgütewerte derart erzeugt sind, dass die Wahrscheinlichkeit für das Vorhandensein eines Kantenverlaufs in einer bestimmten Bildrichtung umso größer ist, je kleiner der Einzel-Richtungsgütewert ist.

Wie dem Verlauf der Einzel-Richtungsgütewerte in Figur 4 zu entnehmen ist, können diese Einzel-Richtungsgütewerte Mehrdeutigkeiten dahingehend aufweisen, dass zwei oder mehr lokale Minima vorhanden sind, so dass eine Entscheidung darüber, in welcher Richtung innerhalb des Bildes eine Kante verläuft nur mit einer Unsicherheit getroffen werden kann.

Es hat sich gezeigt, dass solche Mehrdeutigkeiten weitgehend vermieden werden können, wenn die Einzel-Richtungsgütewerte der zu interpolierenden Bildpunkte einer Gruppe addiert werden, um zusammengesetzte Richtungsgütewerte für verschiedene Bildrichtungen zu ermitteln. In dem Beispiel gemäß Figur 3 führt die Addition mehrerer Einzel-Richtungsgütewerte zu einer Menge zusammengesetzter Richtungsgütewerte, die in dem Beispiel für eine Bildrichtung dx = 3 ein ausgeprägtes Minimum besitzen, so dass eine hohe Wahrscheinlichkeit für das Vorhandensein eines Kantenverlaufs in dieser Bildrichtung dx = 3 gegeben ist.

Bei dem erfindungsgemäßen Verfahren wird durch Vergleich der für die einzelnen Bildrichtungen ermittelten, dem zu interpolierenden Bildpunkt zugewiesenen Richtungsgütewerte eine Bildrichtung als Interpolationsrichtung ausgewählt und ein Bildinformationswert zu dem zu interpolierenden Bildpunkt 15 wird unter Verwendung von Originalbildpunkten interpoliert, die in der Interpolationsrichtung benachbart zu dem zu interpolierenden Bildpunkt liegen. Die Auswahl einer Bildrichtung als Interpolationsrichtung umfasst beispielsweise die Ermittlung eines Minimums der zusammengesetzten Richtungsgütewerte und das Auswählen der Bildrichtung als Interpolationsrichtung, für die das Minimum vorliegt.

Die Interpolation des Bildinformationswertes erfolgt beispielsweise durch Bilden des Mittelwertes der Bildpunkte der Originalbildzeilen y-1, y+1, die in der Interpolationsrichtung benachbart zu dem zu interpolierenden Bildpunkt 15 liegen. Mit dx0 sei nachfolgend die anhand der zusammengesetzten Richtungsgütewerte ermittelte Interpolationsrichtung bezeichnet, für den interpolierten Bildinformationswert des zu interpolierenden Bildpunktes (x,y) gilt dann:

$$S(x,y) = \frac{1}{2} \cdot \left[ S(x - dx0, y-1) + S(x + dx0, y+1) \right] \qquad (3).$$

Während in Figur 4 Verläufe der Einzel-Richtungsgütewerte und dementsprechend die Verläufe der zusammengesetzten Richtungsgütewert als kontinuierliche Kurven für eine Vielzahl von Bildrichtungen dx, insbesondere auch für Bildrichtungen mit einem nicht ganzzahligen dx, aufgetragen sind, werden zur Minimierung des Rechenaufwandes bei der Ermittlung der Einzel-Richtungsgütewerte vorteilhafterweise nur jeweils eine vorgegebene Anzahl von Bildrichtungen untersucht, beispielsweise nur die Bildrichtungen mit dx = -7...7, um dadurch eine Anzahl diskreter zusammengesetzter Richtungsgütewerte zu erhalten.

Für die Einzel-Richtungsgütewerte wird im Weiteren folgende Nomenklatur verwendet: q(u,v)[dx]. q bezeichnet dabei einen Einzel-Richtungsgütewert, u,v bezeichnen die Koordinaten des Bildpunktes, dem dieser Einzel-Richtungsgütewert zugeordnet ist, und dx bezeichnet die jeweilige Bildrichtung, für welche der Einzel-Richtungsgütewert ermittelt wurde. Für die zusammengesetzten Richtungsgütewerte wird nachfolgen die Nomenklatur qd(u,v)[dx] verwendet. Für den dem zu interpolierenden Bildpunkt 15 mit den Koordinaten (x,y) zugeordneten zusammengesetzten Richtungsgütewert gilt dabei:

$$qd(x, y)[dx] = \sum_i \sum_k q(x+i, y+k)[dx] \qquad\qquad (4).$$

i und k bezeichnen dabei die Koordinaten der Bildpunkte der Gruppe relativ zu den Koordinaten des zu interpolierenden Bildpunkts 15. Für das anhand von Figur 3 erläuterte Beispiel, bei dem die Bildpunkte 11, 13, 15, 17 und 19 zu der Gruppe gehören, gilt k = 0 und i = -4, -2, 0, 2, 4.

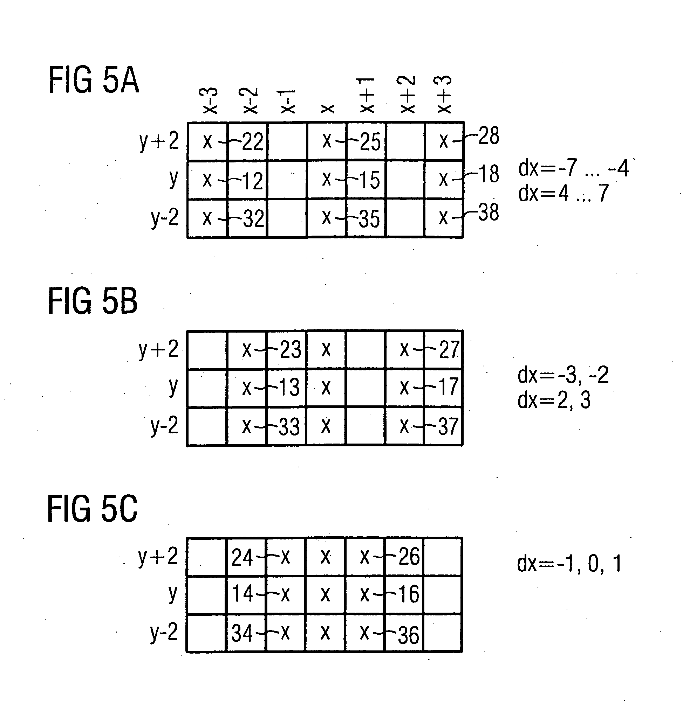

Vorzugsweise ist die Gruppe der Bildpunkte, deren Einzel-Richtungsgütewerte für die Ermittlung eines zusammengesetzten Richtungsgütewertes addiert werden, abhängig von der jeweils betrachteten Bildrichtung, wie nachfolgend anhand der Figuren 5A bis 5C erläutert wird. In den Figuren 5A bis 5C sind jeweils ausschnittsweise Bildbereiche dargestellt, in denen die zu einer Gruppe gehörenden Bildpunkte, deren Einzel-Richtungsgütewerte zu zusammengesetzten Richtungsgütewerten addiert werden, durch Kreuze markiert sind. Da alle Bildpunkte einer Gruppe Zwischenzeilen entstammen, sind in Figur 5 lediglich die Zwischenzeilen dargestellt. Die einzelnen Gruppen umfassen jeweils neun Bildpunkte, von denen einer der zu interpolierende Bildpunkt 15 ist.

Bezug nehmend auf Figur 5A werden für die Ermittlung eines zusammengesetzten Richtungsgütewertes für die Bildrichtungen dx = -7...-4 und dx = 4...7 Einzel-Richtungsgütewerte der Bildpunkte 12, 15, 18, 22, 25, 28 und 32, 35, 38 berücksichtigt. Der Abstand der Bildpunkte 12, 22, 32 und 18, 28, 38 zu dem zu interpolierenden Bildpunkt 15 in horizontaler Richtung des Bildes beträgt dabei drei Bildpunkte. Den zusammengesetzten Richtungsgütewert für den zu interpolierenden Bildpunkt 15 erhält man für die in Figur 5A dargestellte Gruppe unter Verwendung von Gleichung (4) für i = -3, 0, 3 und k = -2, 0, 2.

Eine zweite Gruppe von Bildpunkten, deren Einzel-Richtungsgütewerte zur Ermittlung eines zusammengesetzten Richtungsgütewertes für die Bildrichtungen dx = -3, -2 und dx = 2, 3 verwendet werden, sind in Figur 5B dargestellt. Diese Gruppe umfasst neben dem zu interpolierenden Bildpunkt 15 und den in vertikaler Richtung benachbart zu dem zu interpolierenden Bildpunkt 15 angeordneten Bildpunkten 25, 35 die Bildpunkte 13, 23, 33 und 17, 27, 37. Der Abstand dieser zuletzt genannten Bildpunkte zu dem zu interpolierenden Bildpunkt 15 in horizontaler Richtung des Bildes beträgt dabei zwei Bildpunkte. Die zusammengesetzten Richtungsgütewerte für den zu interpolierenden Bildpunkt 15 für die Bildrichtungen dx = -3, -2 und dx = 2, 3 erhält man anhand von Gleichung (4) für i = -2, 0, 2 und k = -2, 0, 2.

Figur 5C veranschaulicht eine dritte Gruppe von Bildpunkten, deren Einzel-Richtungsgütewerte für die Ermittlung eines zusammengesetzten Richtungsgütewertes für die Bildrichtungen dx = -1, 0, 1 addiert werden. Diese dritte Gruppe umfasst neben dem zu interpolierenden Bildpunkt 15 und den in vertikaler Richtung zu diesem Bildpunkt 15 benachbarten Bildpunkten 25, 35 die weiteren Bildpunkte 14, 24, 34 und 16, 26, 36. Ein Abstand der zuletzt genannten Bildpunkte zu dem zu interpolierenden Bildpunkt 15 in horizontaler Richtung des Bildes beträgt dabei einen Bildpunkt. Den zusammengesetzten Richtungsgütewert für die Bildrichtung dx = -1, 0, 1 erhält man aus den Einzel-Richtungsgütewerten unter Verwendung von Gleichung (4), für i = -1, 0, 1 und k = -2, 0, 2.

Bei dem zuvor erläuterten Verfahren umfasst jede Gruppe von Bildpunkten eine Untergruppe mit einer Anzahl - in dem Beispiel sechs - von Bildpunkten, die in horizontaler Richtung beabstandet zu dem zu interpolierenden Bildpunkt 15 angeordnet sind. Der horizontale Abstand der Bildpunkte dieser Untergruppe zu dem zu interpolierenden Bildpunkt 15 ist dabei umso größer, je größer der Absolutbetrag des die Bildrichtung vorgebenden Wertes dx ist. Dies ist gleichbedeutend damit, dass der horizontale Abstand der Bildpunkte dieser Untergruppe zu dem zu interpolierenden Bildpunkt umso größer ist, je stärker der die Bildrichtung vorgebende Winkel φ von der Vertikalen abweicht bzw. je flacher dieser Winkel gegenüber der Horizontalen ist.

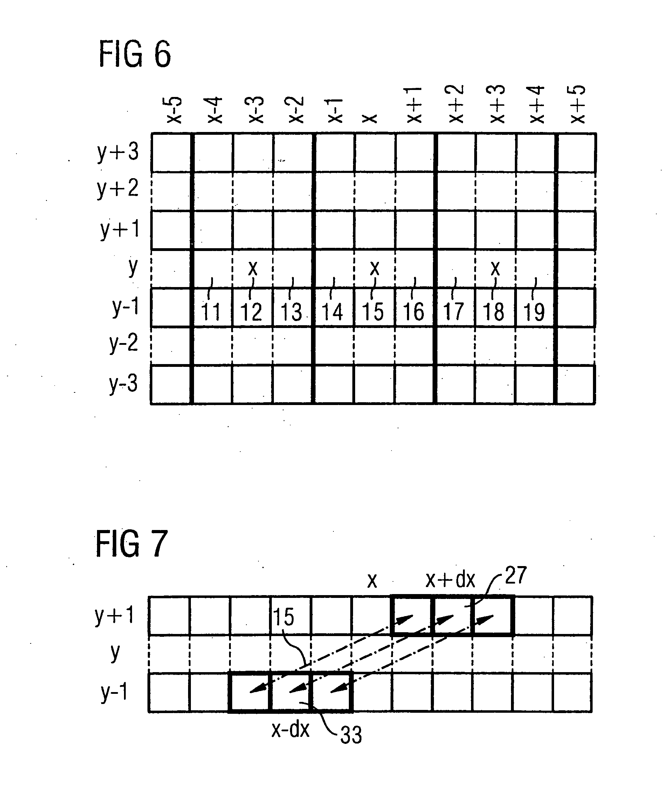

Zur Reduzierung des Rechenaufwandes werden vorteilhafterweise nicht zu jedem Bildpunkt einer zu interpolierenden Zwischenzeile zusammengesetzte Richtungsgütewerte ermittelt, sondern solche zusammengesetzten Richtungsgütewerte werden nur für jeden n-ten Bildpunkt einer zu interpolierenden Zwischenzeile ermittelt. Für jeden dieser n-ten Bildpunkte wird anhand der zusammengesetzten Richtungsgütewerte dann eine Interpolationsrichtung ermittelt und diese Interpolationsrichtung wird für die in horizontaler Richtung benachbarten Bildpunkte übernommen. Bezug nehmend auf Figur 6 werden in der zu interpolierenden Zwischenzeile y beispielsweise nur für jeden dritten Bildpunkt zusammengesetzte Richtungsgütewerte ermittelt, aus denen dann eine Interpolationsrichtung ermittelt wird. Die für diese Bildpunkte 12, 15, 18 ermittelten Interpolationsrichtungen werden dann für die benachbart zu diesen Bildpunkten angeordneten Bildpunkte übernommen, d. h. für die Bildpunkte 11, 13 im Falle des Bildpunktes 12, für die Bildpunkte 14, 17 im Falle des Bildpunktes 15 und für die Bildpunkte 16, 19 im Falle des Bildpunktes 18. Bei der Ermittlung von Interpolationsrichtungen findet bei diesem Vorgehen eine Unterabtastung mit einem Unterabtastungsfaktor n statt. Für die anhand der Figuren 5A bis 5C erläuterten Gruppen von Bildpunkten, deren Einzel-Richtungsgütewerte addiert werden, bedeutet dies entsprechend, dass sich der Abstand der zu einer Gruppe gehörenden Bildpunkte zu dem zu interpolierenden Bildpunkt 15 um den Unterabtastungsfaktor n vergrößert. Für den zusammengesetzten Richtungsgütewert gilt Bezug nehmend auf Gleichung (4) und unter Berücksichtigung des Unterabtastungsfaktors n:

$$qd(x,y)[dx] = \sum_i \sum_k q(x(n \cdot i), y+k)[dx] \qquad (4a).$$

Wie bereits erläutert, stellen die zu einem Bildpunkt ermittelten Einzel-Richtungsgütewerte ein Maß für eine Wahrscheinlichkeit dar, dass eine Kante in dem Bild in der jeweiligen Richtung verläuft, für welche der Einzel-Richtungsgütewert ermittelt wurde. Die Ermittlung der Einzel-Richtungsgütewerte für einen Bildpunkt wird nachfolgend für die Ermittlung eines Einzel-Richtungsgütewertes zu dem Bildpunkt 15 mit den Koordinaten (x,y) erläutert. Die für diesen Bildpunkt 15 erläuterte Ermittlung des Einzel-Richtungsgütewertes $q(x,y)[dx]$ ist in gleicher Weise auch auf die übrigen Bildpunkte der Gruppe von Bildpunkten, deren Einzel-Richtungsgütewertes für die Ermittlung des Richtungsgütewertes berücksichtigt werden, anzuwenden.

Der Einzel-Richtungsgütewert ist abhängig von einem Richtungskorrelationswert $dm(x,y)[dx]$. Dieser Richtungskorrelationswert bildet ein Maß für die Korrelation der Bildinformationswerte wenigstens zweier Bildpunkte, die in einer gegebenen Bildrichtung dx benachbart zu dem Bildpunkt mit den Koordinaten (x,y), für den der Einzel-Richtungsgütewert ermittelt werden soll, angeordnet sind. Im einfachsten Fall entspricht der Richtungskorrelationswert der Differenz der Bildinformationswerte der in der zu untersuchenden Bildrichtung dx benachbart zu dem betrachteten Bildpunkt angeordneten Bildpunkte, es gilt also:

$$dm(x,y)[dx] = \left| S(x-dx, y-1) - S(x+dx, y+1) \right| \qquad (5).$$

$| \cdot |$ bezeichnet dabei eine Betragsbildung. Der Richtungskorrelationswert entspricht in diesem Fall dem Betrag der Differenz der den Bildpunkte zugeordneten Bildinformationswerte.

Figur 7 veranschaulicht die Ermittlung dieses Richtungskorrelationswertes $dm(x,y)[dx]$ des Bildpunktes 15 mit den Koordinaten (x,y). Die untersuchte Bildrichtung ist in dem Beispiel die Bildrichtung mit dx = 2. Die Bezugszeichen 27 und 33 bezeichnen die Bildpunkte, die in dieser Bildrichtung benachbart zu dem Bildpunkt 15 liegen und zu deren Bildinformationswerten die Differenz für die Ermittlung des Richtungskorrelationswertes $dm(x,y)[dx]$ ermittelt wird.

Zur Ermittlung des Richtungskorrelationswertes besteht Bezug nehmend auf Figur 7 auch die Möglichkeit, neben den Bildinformationswerten der Bildpunkte 27, 33, die in der Bildrichtung dx benachbart zu dem Bildpunkt 15 angeordnet sind, auch die Bildinformationswerte solcher Bildpunkte heranzuziehen, die in horizontaler Richtung benachbart zu den Bildpunkten 27, 33 liegen. Für den Richtungskorrelationswert gilt dann:

$$dm(x,y)[dx] = \sum_{j=-\delta}^{\delta} \left| S(x-dx+j, y+1) - S(x+dx+j, y+1) \right| \qquad (5a).$$

Die Variable $\delta$ stellt hierbei ein Maß für die Anzahl der zusätzlich zu berücksichtigenden Bildinformationswerte dar.

Allgemein ist der Richtungskorrelationswert $dm(x,y)[dx]$ eine Funktion des Betrags der Differenz der Bildinformationswerte wenigstens zweier in der betrachteten Bildrichtung dx benachbart zueinander angeordneter Bildpunkte.

Allgemein gilt, dass der Einzel-Richtungsgütewert $q(x,y)[dx]$ für den Bildpunkt 15 abhängig ist von dem jeweiligen Richtungskorrelationswert, der für den Bildpunkt 15 ermittelt wird, es gilt also:

$$q(x,y)[dx] = f(dm(x,y)[dx])$$

$$(6).$$

f(.) bezeichnet dabei eine Funktion, die den Richtungskorrelationswert auf den Einzel-Richtungsgütewert abbildet. Der Einzel-Richtungsgütewert q für eine gegebene Richtung kann dabei insbesondere dem Richtungskorrelationswert für die jeweilige Richtung entsprechen.

Ein auf die zuvor erläuterte Weise für eine bestimmte Richtung dx ermittelter Richtungskorrelationswert ist umso kleiner, je weniger sich die Bildinformationswerte der in der betrachteten Bildrichtung dx benachbart zueinander angeordneten Originalbildpunkte unterscheiden. Die Wahrscheinlichkeit für das Vorhandensein eines Kantenverlaufs in dieser Richtung ist dabei umso größer, je weniger sich die Bildinformationswerte dieser Originalbildpunkte unterscheiden, d. h. je kleiner der Richtungskorrelationswert ist.

Vorzugsweise wird bei der Ermittlung des Richtungskorrelationswertes die vertikale Richtung, also die Richtung mit dx = 0, bevorzugt. Dies kann dadurch erreicht werden, dass bei der Ermittlung des Einzel-Richtungsgütewertes zu den Richtungskorrelationswerten dm aller Bildrichtungen außer der vertikalen Richtung ein konstanter oder variabler Wert hinzuaddiert wird.

Bei einer Ausführungsform ist vorgesehen, zu dem Richtungskorrelationswert jeder Richtung einen Vertikalkorrelationswert hinzuzuaddieren. Dieser Vertikalkorrelationswert stellt ein Maß dar für die Abweichung zwischen einem Interpolationsergebnis, das bei Interpolation in der vertikalen Richtung erhalten wird, und dem Interpolationsergebnis, das bei Interpolation in einer anderen, von der vertikalen Richtung abweichenden Richtung erhalten wird. Für diesen Vertikalkorrelationskoeffizienten gilt:

$$mv(x,y)[dx] = \left| (S(x-dx, y-1) + S(x+dx, y+1)) - (S(x, y-1) + S(x, y+1)) \right|$$
$$= \left| ip(x, y[dx]) - ip(x, y[dx=0]) \right|$$
$$(7).$$

Der erste Term ip(x,y)[dx] repräsentiert dabei den Mittelwert der in der Bildrichtung dx ≠ 0 benachbart zu dem Bildpunkt mit den Koordinaten (x,y) angeordneten Originalbildpunkte, während der zweite Term ip(x,y)[dx=0] den Mittelwert der Bildinformationswerte der Bildpunkte repräsentiert, die in der vertikalen Richtung benachbart zu dem Bildpunkt mit den Koordinaten (x,y) angeordnet sind. Für den Einzel-Richtungsgütewert q gilt unter Verwendung des Vertikalkorrelationswertes:

$$q(x,y)[dx] = k1 \cdot dm(x,y)[dx] + k2 \cdot mv(x,y)[dx] \qquad (8).$$

k1, k2 bezeichnen dabei Gewichtungsfaktoren die bestimmen, welches Gewicht dem Vertikalkorrelationswert bei der Ermittlung des Einzel-Richtungsgütewertes beigemessen wird. Wegen mv[dx=0]=0 wird bei der Ermittlung des Einzel-Richtungsgütewertes die vertikale Richtung implizit bevorzugt. Eine andere Richtung als die vertikale Richtung liefert nur dann einen kleineren Einzel-Richtungsgütewert als die vertikale Richtung, wenn deren Richtungskorrelationswert unter Berücksichtigung der Gewichtungsfaktoren k1, k2 kleiner ist als der Vertikalkorrelationswert mv.

Der Gewichtungsfaktor k2, mit dem der Vertikalkorrelationswert mv multipliziert wird, ist vorzugsweise variabel, um in solchen Fällen, in denen sicher oder mit hoher Wahrscheinlichkeit kein Kantenverlauf in vertikaler Richtung vorliegt, eine Bevorzugung der vertikalen Richtung zu verhindern.

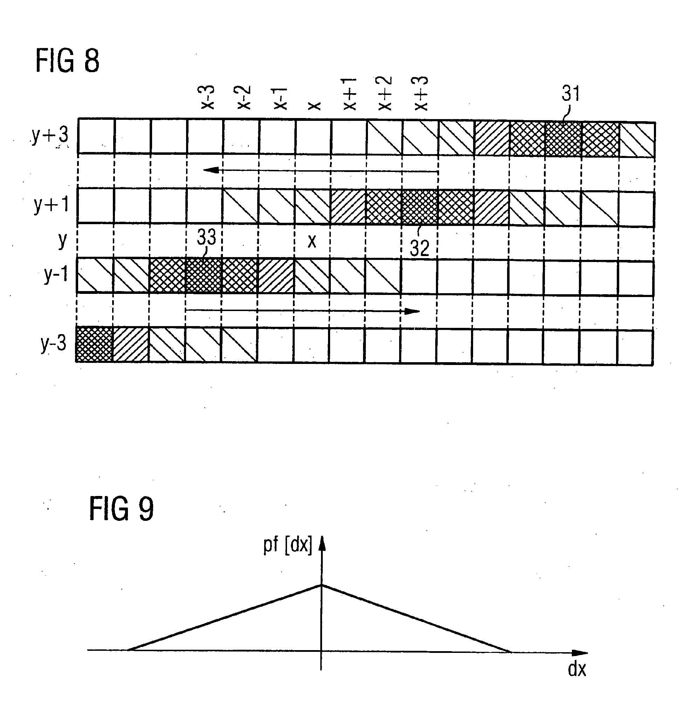

Die Wahrscheinlichkeit für das Vorhandensein einer Kante in vertikaler Richtung kann beispielsweise durch Untersuchen der Bildinformationswerte solcher Originalbildzeilen, die vertikaler Richtung oberhalb und unterhalb der zu interpolierenden Bildzeile liegen, ermittelt werden. Dies wird nachfolgend anhand von Figur 8 erläutert.

Figur 8 zeigt einen Bildausschnitt, in dem abschnittsweise die zu interpolierende Zwischenzeile y sowie jeweils zwei oberhalb und zwei unterhalb dieser zu interpolierenden Zwischenzeile y angeordneten Originalbildzeilen y-3, y-1, y+1, y+3 dargestellt sind. Um ein Maß für die Wahrscheinlichkeit für das Vorhandensein einer vertikalen Kante zu ermitteln, werden Bezug nehmend auf Figur 8 die Bildinformationswerte der unmittelbar benachbart zu der zu interpolierenden Zeile y liegenden Originalbildzeilen y+1, y-1 im Bereich der horizontalen Position x des Bildpunktes 15, für den der Einzel-Richtungsgütewert ermittelt wird, untersucht. In Figur 8 sind die den einzelnen Bildpunkten zugeordneten Bildinformationswerte durch unterschiedliche Schraffuren dargestellt. Für die Ermittlung der Wahrscheinlichkeit, ob ein Kantenverlauf in vertikaler Richtung vorliegt, werden in den Originalbildzeilen y-1, y+1 im Bereich der horizontalen Position des Bildpunktes 15 in horizontaler Richtung solche Bildbereiche ermittelt, innerhalb derer die den einzelnen Originalbildpunkten zugeordneten Bildinformationswerte kontinuierlich zunehmen, d. h. größer werden, oder kontinuierlich abnehmen, d. h. kleiner werden. Ermittelt werden dabei insbesondere solche Bereiche, die symmetrisch zur horizontalen Position des Bildpunktes 15 liegen und innerhalb derer die Bildinformationswerte kontinuierlich zunehmen oder kontinuierlich abnehmen. m1 bezeichnet nachfolgend einen Bereich innerhalb der Originalbildzeile y+1, in dem die Bildinformationswerte kontinuierlich zunehmen. Das Vorzeichen dieses Wertes bestimmt dabei die Richtung, in der die Bildinformationswerte zunehmen, wobei ein positives Vorzeichen für eine Zunahme der Bildinformationswerte nach rechts und ein negatives Vorzeichen für eine Zunahme der Bildinformationswerte nach links steht. Der Absolutwert dieses Bereichswertes m1 gibt an, wie weit sich der Bereich ausgehend von der Position des Bildpunktes 15 nach links und rechts erstreckt, innerhalb dessen die Bildinformationswerte kontinuierlich zunehmen. m1 = 4 bedeutet beispielsweise, dass die Bildinformationswerte in der Originalbildzeile y+1 innerhalb eines Horizontalbereiches, der von der Position x-4 bis zu der Position x+4 reicht, kontinuierlich zunehmen. Der in entsprechender Weise für die unterhalb der zu interpolierenden Zwischenzeile y liegenden Originalbildzeile y-1 definierte Bereichswert wird nachfolgend mit m2 bezeichnet. Die Untersuchung der Originalbildzeilen y+1, y-1 in horizontaler Richtung wird vorzugsweise begrenzt, beispielsweise auf einen Bereich von 13 in horizontaler Richtung benachbart zueinander angeordneter Bildpunkte, also der Bildpunkte mit den Horizontalpositionen x-6, ..., x+6. Der maximale Absolutbetrag der Bereichswerte m1, m2 beträgt damit 6.

Der oben erläuterte Vertikalgewichtungsfaktor k2 wird abhängig von einem Vergleich der Bereichswerte m1, m2 ermittelt. Für den Vertikalgewichtungsfaktor k2 gilt beispielsweise:

$$k2 = k3 \cdot vg \qquad\qquad (9).$$

k3 stellt hierbei einen konstanten Faktor für die Gewichtung des Vertikalkorrelationskoeffizienten mv dar, während vg ein vom Vergleich der Bereichswerte m1, m2 abhängiger Wert ist, der beispielsweise drei unterschiedliche Werte, nämlich 0, 1 oder 2 annehmen kann. Für diesen variablen Vertikalgewichtungsfaktor vg gilt beispielsweise vg = 2, wenn keine der nachfolgenden Bedingungen I bis IV erfüllt ist. Dabei gilt:

```
vg = 0      für m1 > 4 & m2 < -4                          (I)


vg = 0      für m1 < -4 & m2 > 4                          (II)

vg = 0      für m1 = 6, m1 = -6, m2 = 6, m2 = -6         (III)


vg = 1      für |m1| > 2, |m2| > 2,
            wenn nicht (I), (II), (III) erfüllt           (IV).
```

Ein Komma (,) in den Bedingungen (I) bis (IV) steht jeweils für eine Oder-Verknüpfung.

Eine antiparallele Zunahme oder Abnahme der Bildinformationswerte in den Originalbildzeilen y-1, y+1, wie er bei vorliegen der Bedingungen (I) oder (II) ist, stellt ein starkes Indiz dafür dar, dass kein Kantenverlauf in vertikaler Richtung vorhanden ist. In diesem Fall ist der vertikale Gewichtungsfaktor vg = 0, um damit die vertikale Richtung bei der Ermittlung des Einzel-Richtungsgütewertes (vgl. (8)) nicht zu bevorzugen. Eine solche antiparallele Zunahme oder Abnahme der Bildinformationswerte kann vielmehr auf eine schräg verlaufende dünne Linie hindeuten. Eine solche Linie ist eine Bildstruktur, mit zwei parallel verlaufenden Kanten. Figur 8 zeigt ausschnittsweise eine solche schräg, d.h. unter einem Winkel größer als Null gegenüber der Senkrechten, verlaufenden dünnen Linie. Die Bezugszeichen 31-34 in dieser Figur bezeichnen die Bildpunkte, für welche die Bildinformationswerte - die in dem dargestellte Beispiel Helligkeitswerte sind - jeweils Maximalwerte annehmen und ausgehend von denen die Bildinformationswerte nach links und rechts in horizontaler Richtung jeweils abnehmen. Für das dargestellte Beispiel gilt m1 = 3 und m2 = -3, so dass vg=1 gesetzt würde. Dieser Wert vg=1 liegt zwischen vg=0 und vg=2 und repräsentiert den Fall, bei dem nicht sicher zugunsten einer schräg verlaufenden dünnen Linie und damit gegen eine vertikal verlaufende Kante entschieden wird (vg=0), bei dem jedoch auch nicht sicher gegen eine schräg verlaufende dünne Linie und zugunsten einer vertikalen Kante entschieden wird (vg=2).

Bei einem weiteren Ausführungsbeispiel ist vorgesehen, die Bedingungen für den vertikalen Gewichtungsfaktor vg=1 enger zu definieren und vg=1 nur dann zu setzen, wenn keine der Bedingungen (I) und (II) und wenn eine der folgenden Bedingungen erfüllt:

$$m1 \geq 2 \ \& \ m2 \leq -1 \qquad (Va)$$

$$m1 \geq 1 \ \& \ m2 \leq -2 \qquad (Vb)$$

$$m1 \leq -2 \ \& \ m2 \geq 1 \qquad (Vc)$$

$$m1 \leq -1 \ \& \ m2 \geq 2 \qquad (Vc)$$

Die Information, dass kein Kantenverlauf in vertikaler Richtung vorhanden ist, kann im Umkehrschluss dazu genutzt werden, bei der Ermittlung des Einzel-Richtungsgütewertes solche Bildrichtungen zu bevorzugen, die besonders stark von der vertikalen Richtung abweichen. Dies kann dadurch erreicht werden, dass bei der Ermittlung des Einzel-Richtungsgütewertes zu dem von dem Richtungskorrelationswert dm abhängigen Term ein weiterer Term hinzuaddiert wird, der richtungsabhängig ist, und der umso kleiner ist, je stärker die jeweilige Richtung von der Vertikalen abweicht. Für den Einzel-Richtungsgütewert q gilt somit:

$$q(x,y)[dx] = k1 \cdot dm(x,y)[dx] + k3 \cdot vg \cdot mv(x,y)[dx] + k4 \cdot fg \cdot pf[dx] \qquad (10).$$

Der Term k4·fg·pf[dx] stellt dabei einen richtungsabhängigen Wert dar. k4 ist hierbei ein konstanter Gewichtungsfaktor, der angibt, wie stark dieser richtungsabhängige Wert im Verhältnis zu dem Richtungskorrelationswert dm gewichtet werden soll. Der weitere Gewichtungsfaktor fg ist abhängig von dem Vertikalgewichtungsfaktor vg, wobei gilt:

$$fg = 1 \qquad für \ vg = 0 \qquad (11a)$$

$$fg = 0 \qquad für \ vg \neq 0 \qquad (11b).$$

fg ist somit nur dann 1, um von der vertikalen Richtung abweichende Richtungen zu bevorzugen, wenn der variable Vertikalgewichtungsfaktor vg gleich Null ist, wenn das Vorhandensein eines Kantenverlaufs in vertikaler Richtung also mit hoher Wahrscheinlichkeit ausgeschlossen werden kann. Der weitere Faktor pf[dx] ist von der jeweiligen Bildrichtung abhängig und wird nachfolgend als richtungsabhängiger Gewichtungsfaktor bezeichnet. Dieser richtungsabhängige Gewichtungsfaktor pf[dx] nimmt ab, je stärker die jeweilige Bildrichtung von der vertikalen Richtung abweicht.
Figur 9 zeigt beispielhaft den Verlauf dieses Gewichtungsfaktors pf[dx] abhängig von der Bildrichtung dx. Für diesen Gewichtungsfaktor gilt beispielsweise:

$$pf[dx] = a - |dx| \qquad (12).$$

Je größer der die Bildrichtung bestimmende Wert dx hierbei ist, umso kleiner ist der Gewichtungsfaktor pf[dx] und umso stärker werden "flache Bildrichtungen" bei der Ermittlung des Einzel-Richtungsgütewertes gemäß Gleichung (10) bevorzugt. Der Wert a in Gleichung (12) ist ein konstant vorgegebener Wert, der beispielsweise gleich dem Wert dx für die "flachste" bei der Ermittlung des Einzel-Richtungsgütewertes untersuchte Bildrichtung ist, also die Bildrichtung deren Richtungswinkel φ am größten ist.

Optional besteht die Möglichkeit, bei der Ermittlung der Einzel-Richtungsgütewerte für alle Richtungen außer der vertikalen Richtung einen konstanten additiven Wert pv[dx] zu berücksichtigen. Für die Ermittlung des Einzel-Richtungsgütewertes gilt dann:

$$q(x,y)[dx] = k1 \cdot dm(x,y)[dx] + k3 \cdot vg \cdot mv(x,y)[dx] \\ + k4 \cdot fg \cdot pf(x,y)[dx] + pv[dx] \qquad (13).$$

Für pv [dx] gilt hierbei:

```
pv[dx] = 0     für dx = 0
pv[dx] = b     für dx ≠ 0                    (14).
```

Durch dieses Vorgehen ist sichergestellt, dass in den Fällen, in denen für keine Bildrichtung ein signifikantes Minimum ermittelt wird, der vertikalen Richtung der Vorzug gegeben wird, so dass die vertikale Richtung als Interpolationsrichtung ausgewählt wird.

Vorzugsweise wird bei der Ermittlung von pv[dx] zusätzlich der vertikale Gewichtungsfaktor vg berücksichtigt, so dass gilt:

```
pv[dx] = 0     für dx = 0 und vg = 2
pv[dx] = b     für dx ≠ 0 oder vg = 0,1      (15).
```

Der Vorteil dieses Vorgehens besteht darin, dass eine Bevorzugung der Nullrichtung nur für den Fall vg=2 durchgeführt wird, also dann, wenn keine längeren monotonen Verläufe ober-oder unterhalb vorhanden sind, und damit die Wahrscheinlichkeit für das Vorhandensein einer dünnen flachen Linie gering ist.

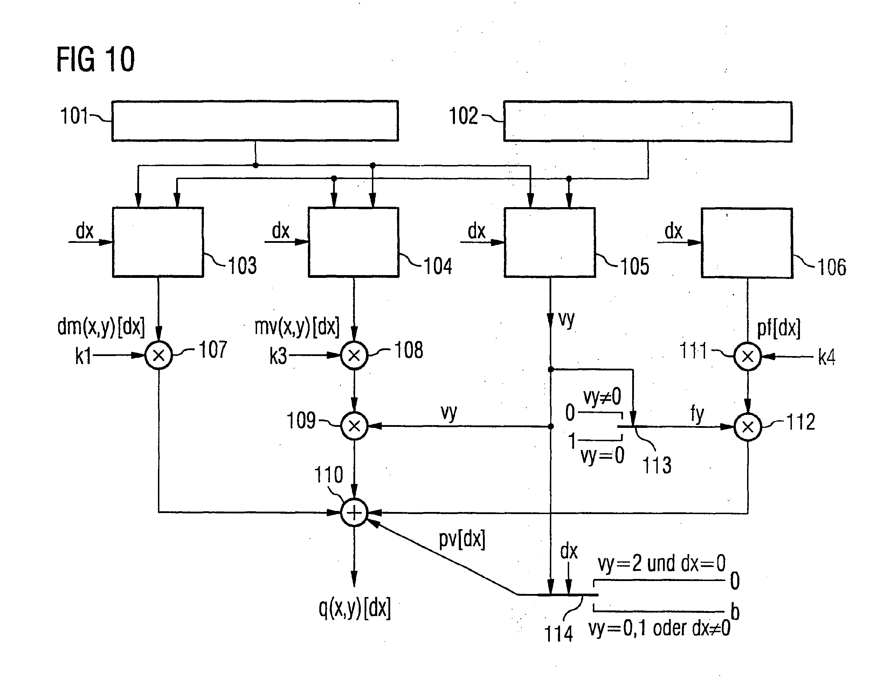

Figur 10 zeigt schematisch eine Anordnung zur Ermittlung eines Einzel-Richtungsgütewertes für eine gegebenen Bildrichtung dx. Die Anordnung umfasst zwei Speicheranordnungen 101, 102, die jeweils dazu dienen, die Bildinformationswerte der Originalbildzeilen zu speichern, die benachbart zu der zu interpolierenden Zwischenzeile liegen. Die Größe dieser Speicheranordnungen 101, 102 ist dabei abhängig von den Bildrichtungen, die untersucht werden sollen. Für zu untersuchende Bildrichtungen mit dx = -7...7 muss jeder Speicher in der Lage sein, 15 Bildinformationswerte der oberhalb und unterhalb der Zwischenzeile liegenden Originalbildzeilen zu speichern.

Die Anordnung umfasst eine erste Berechnungseinheit 103, die für die jeweilige Bildrichtung dx den Richtungskorrelationswert dm[dx] ermittelt. Eine zweite Berechnungseinheit 104 ermittelt den zuvor erläuterten Vertikalkorrelationswert mv[dx], und eine dritte Berechnungseinheit 105 berechnet den zuvor erläuterten variablen Vertikalgewichtungsfaktor vg. Eine vierte Berechnungseinheit 106 stellt den richtungsabhängigen Gewichtungsfaktor pv[dx] zur Verfügung. Den einzelnen Berechnungseinheiten ist dabei jeweils die Information dx über die jeweils zu untersuchende Bildrichtung zugeführt.

Ein der ersten Berechnungseinheit 103 nachgeordneter erste Multiplizierer 107 multipliziert den Richtungskorrelationskoeffizienten dm[dx] mit dem konstanten Gewichtungsfaktor k1. Das durch diesen ersten Multiplizierer 107 erzeugte Multiplikationsergebnis ist einem Addierer 110 zugeführt, an dessen Ausgang der von der jeweiligen Richtung dx abhängige Einzel-Richtungsgütewert q(x,y)[dx] zur Verfügung steht. Der zweiten Berechnungseinheit 104 ist ein zweiter Multiplizierer 108 nachgeordnet, der den Vertikalkorrelationswert mv[dx] mit dem konstanten Gewichtungsfaktor k3 multipliziert. Das hierdurch erhaltene Multiplikationsergebnis wird mittels eines weiteren Multiplizierers 109 mit dem durch die dritte Berechnungseinheit 105 erzeugten variablen Vertikalgewichtungsfaktor vg multipliziert, wobei das hierdurch entstehende Multiplikationsergebnis ebenfalls dem Addierer 110 zugeführt ist. Der Gewichtungsfaktor fg wird mittels einer Entscheideranordnung 113 abhängig von dem Vertikalgewichtungsfaktor vg erzeugt, wobei der Gewichtungsfaktor fg in erläuterte Weise Null ist, wenn der Vertikalgewichtungsfaktor vg = 1 oder 2 ist. Der am Ausgang der vierten Berechnungseinheit 106 zur Verfügung stehende richtungsabhängige Gewichtungsfaktor pv[dx] wird mittels eines vierten Multiplizierers 111 mit dem konstanten Gewichtungsfaktor k4 multipliziert, wobei das dadurch entstehende Multiplikationsergebnis mittels eines weiteren Multiplizierers 112 mit dem Gewichtungsfaktor fg multipliziert wird. Das hierdurch entstehende Multiplikationsergebnis wird dem Addierer 110 zugeführt.

Dem Addierer 110 wird außerdem der weitere Vertikalgewichtungsfaktor pv[dx] zugeführt, der mittels einer weiteren Entscheideranordnung 114 abhängig von dem Vertikalgewichtungsfaktor vg und der untersuchten Bildrichtung dx erzeugt wird.

Die Ermittlung der Interpolationsrichtung bei dem erfindungsgemäßen Verfahren setzt voraus, dass die für einen zu interpolierenden Bildpunkt ermittelten zusammengesetzten Richtungsgütewerte qd(x,y)[dx] miteinander verglichen werden, um einen Minimalwert dieser zusammengesetzten Richtungsgütewerte zu ermitteln. Die Bildrichtung, für welche der Minimalwert ermittelt wird, wird dann als Interpolationsrichtung ausgewählt. Die Anzahl der erforderlichen Vergleiche nimmt dabei mit der Anzahl der untersuchten Bildrichtungen und damit mit der Anzahl der ermittelten zusammengesetzten Richtungsgütewerte zu.

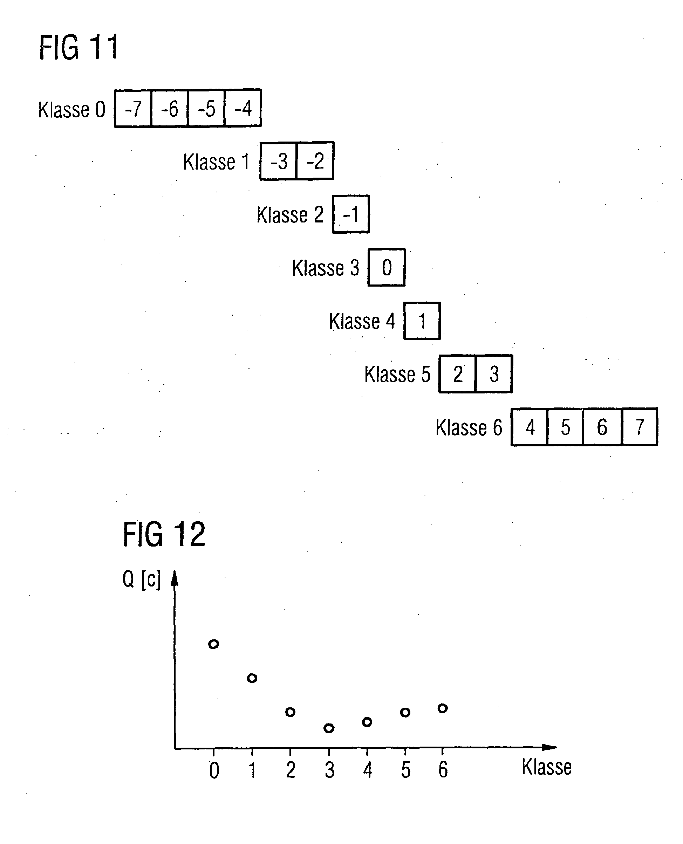

Um diesen Aufwand zu reduzieren besteht die Möglichkeit, mehrere Bildrichtungen zu einer sogenannten Bildrichtungsklasse zusammen zu fassen und jeder dieser Bildrichtungsklassen einen Klassengütewert zuzuordnen. Diese Vorgehen wird nachfolgend anhand von Figur 11 erläutert, wobei zu Zwecken der Erläuterung angenommen wird, dass 15 Bildrichtungen, nämlich die Bildrichtungen mit dx = -7...7 untersucht werden, so dass zunächst für jeden Bildpunkt der untersuchten Gruppe von Bildpunkten (vgl. Figur 3) 15 Einzel-Richtungsgütewerte ermittelt werden. Bezugnehmend auf Figur 11 werden die Bildrichtungen dx = -7...-4 zu einer Klasse 0 zusammengefasst, für die ein Klassengütewert Q(0) ermittelt wird. Die Bildrichtungen dx = -3, -2 werden zu einer Klasse 1, die Bildrichtungen dx = 2, 3 zu einer Klasse 5 und die Bildrichtungen dx = 4...7 zu einer Klasse 6 zusammenfasst. Die Bildrichtungen dx = -1, dx = 0 und dx = 1 bilden jeweils eine eigene Klasse, nämlich die Klassen 2, 3 und 4.

Die Ermittlung eines Klassengütewertes Q(.) zu einer Bildklasse sieht zunächst vor, zu jedem Bildpunkt der untersuchten Gruppe von Bildpunkten einen Einzel-Klassengütewert Q'(a) (x0,y0) zu ermitteln. (x+i,y+k) steht dabei für die Koordinaten des jeweiligen Bildpunktes, und C steht für die jeweilige Klasse. Der Einzel-Klassengütewert Q'(C)(x+i, y+k) ist abhängig von den Einzel-Richtungsgütewerten q(x+i, y+k) [dx], die für den jeweiligen Bildpunkt (x+i,y+k) für die Richtungen ermittelt wurde, die zu der Bildklasse C gehören. Allgemein gilt hierbei:

$$Q'(C)(x+i, y+k) = f(q(x+i, y+k)[dC]) \qquad (16)$$

f(.) steht hierbei für eine Funktion der Einzel-Richtungsgütewerte. dC steht für die unterschiedlichen Richtungen der betrachteten Richtungsklasse C.

Der Einzel-Klassengütewert Q'(C)(x+i,y+k) kann dem Mittelwert der für den jeweiligen Bildpunkt (x+i,y+k) ermittelten Einzel-Richtungsgütewerte entsprechen, in diesem Fall gilt:

$$Q'(C)(x+i, y+k) = \sum_{dC} q(x+i, y+k)[dC] / m \qquad (16a).$$

dC steht dabei für die einzelnen Bildrichtungen, die der Bildklasse C zugeordnet sind.

Der Einzel-Klassengütewert Q'(C)(x+i,y+k) kann darüber hinaus auch dem Minimalwert der für den jeweiligen Bildpunkt (x+i,y+k) ermittelten Einzel-Richtungsgütewerte entsprechen, in diesem Fall gilt:

$$Q'(C)(x+i, y+k) = \min(q(x+i, y+k)[dC]) \qquad (16b).$$

min(.) steht dabei für die Minimum-Funktion, und m steht für die Anzahl der zu der Richtungsklasse C gehörenden Bildrichtungen.

Nach Bildung der Richtungsklassen sind für jeden der zu der Gruppe von Bildpunkten gehörenden Bildpunkte eine Anzahl Klassengütewerte Q'(.) vorhanden, deren Anzahl der Anzahl der vorhandenen Richtungsklassen entspricht. Aus diesen Einzel-Klassengütewerten Q'(.) wird anschließend für jede der Richtungsklassen ein Klassengütewert Q(C) ermittelt, der allgemein eine Funktion der Einzel-Klassengütewerte Q'(.) ist. Für diesen Klassengütewert Q(C) gilt somit:

$$Q(C) = f(Q'(C)(x+i, y+k))$$ (17),

wobei f(.) eine beliebige Funktion der Einzel-Klassengütewerte Q'(.) darstellt.

Der Klassengütewert Q(C) für eine Richtungsklasse kann insbesondere dem Mittelwert der Einzel-Klassengütewerte oder dem Minimalwert dieser Einzel-Klassengütewerte entsprechen.

Figur 12 zeigt schematisch den Verlauf der Klassengütewerte Q(C). Aus diesen Klassengütewerten Q(C) wird bei dem erfindungsgemäßen Verfahren der jeweilige Minimalwert ermittelt um eine Interpolationsrichtung bestimmen zu können. Da ein Klassengütewert Q(C) die Richtungsgütewerte mehrer Bildrichtungen berücksichtigen kann, wie beispielsweise im Fall der Klassen 0, 1 sowie 5 und 6 ist aus dieser Richtungsklasse anschließend eine Bildrichtung auszuwählen, die als Interpolationsrichtung verwendet wird. Diese Auswahl wird beispielsweise dadurch getroffen, dass für den zu interpolierenden Bildpunkt 15 der Richtungskorrelationswert dm für jede der zu der jeweiligen Klasse zusammengefassten Bildrichtungen ermittelt wird und dass die Bildrichtung aus dieser Richtungsklasse als Interpolationsrichtung ausgewählt wird, für die der kleinste Richtungskorrelationskoeffizient ermittelt wird. Sofern der zu interpolierende Bildpunkt in der betrachteten Bildpunktgruppe enthalten ist, kann die Auswahl der Interpolationsrichtung aus der ausgewählten Richtungsklasse auch durch einen Vergleich der für diesen Bildpunkt zuvor ermittelten Einzel-Richtungsgütewerte erfolgen. Als Interpolationsrichtung ausgewählt wird dabei die Bildrichtung, für die der "Beste" Einzel-Richtungsgütewert ermittelt wurde.

Das zuvor erläuterte Verfahren zur Interpolation eines Bildinformationswertes unter Anwendung von Richtungsklassen enthält zusammenfassend die Verfahrensschritte:

- Auswählen einer Bildpunktgruppe, die wenigstens zwei Bildpunkte umfasst,

- Ermitteln jeweils eines Einzel-Richtungsgütewertes für jeden Bildpunkt der Bildpunktgruppe, wobei der Einzel-Richtungsgütewertes abhängig ist von Bildinformationswerten, die Bildbereichen zugeordnet sind, die in der Bildrichtung benachbart zu dem jeweiligen Bildpunkt der Gruppe liegen,

- Bilden von Richtungsklassen, denen jeweils wenigstens eine Bildrichtung zugeordnet ist,

- für jede der Richtungsklassen und für jeden der Bildpunkte Bildpunktgruppe: Ermitteln eines Einzel-Klassengütewertes, der abhängig ist von den Einzel-Richtungsgütewerten des jeweils betrachteten Bildpunkts für die einzelnen Bildrichtungen der Richtungsklasse,

- Erzeugen eines Klassengütewertes für jede Richtungsklasse aus den Einzel-Klassengütewerten, die für die jeweilige Richtungsklasse für die Bildpunkte der Bildpunktgruppe ermittelt wurden,

- Auswählen einer Richtungsklasse anhand eines Vergleichs der Klassengütewerte,

- Auswählen einer Bildrichtung, die der ausgewählten Richtungsklasse zugeordnet ist, als Interpolationsrichtung.

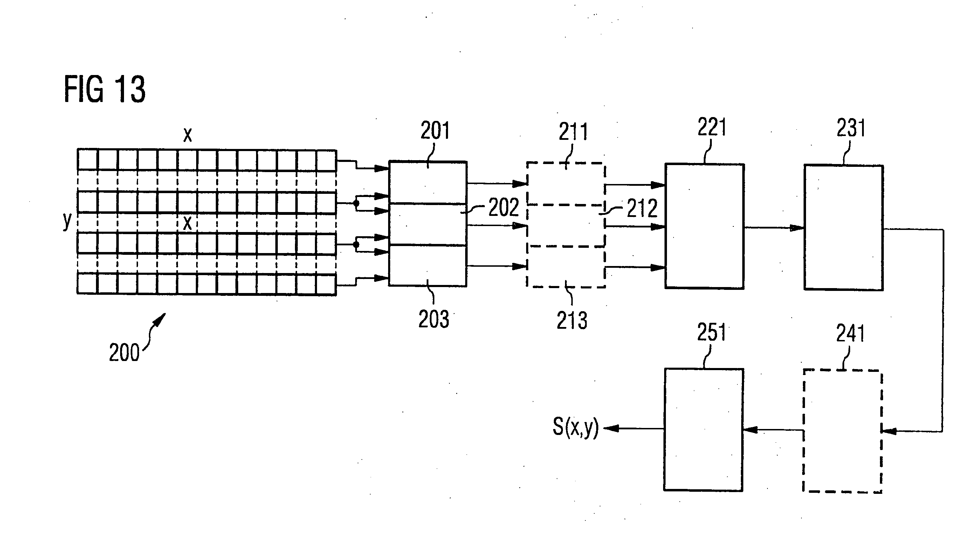

Das erfindungsgemäße Verfahren wird nachfolgend anhand einer möglichen Anordnung zur Durchführung dieses Verfahrens nochmals zusammengefasst. Mit 200 ist in Figur 13 ausschnittsweise ein Bild dargestellt, das Zwischenzeilen mit zu interpolierenden Bildpunkten aufweist. Die Anordnung zur Durchführung des erfindungsgemäßen Verfahrens ermittelt zu einer ausgewählten Gruppe von Bildpunkten mittels Berechnungseinheiten 201, 202, 203, denen jeweils Bildinformationswerte von Originalbildpunkten zugeführt sind, Einzel-Richtungsgütewerte jeweils für eine Anzahl vorgegebener Bildrichtungen dx. Diese Einzel-Richtungsgütewerte sind einer Akkumulationseinheit 221 zugeführt, die für jede der untersuchten Bildrichtungen die Einzel-Richtungsgütewerte zu einem zusammengesetzten Richtungsgütewert zusammenfasst. Die für die einzelnen Bildrichtungen ermittelten zusammengesetzten Richtungsgütewerte sind einer Minimalwertermittlungseinheit 231 zugeführt, die den Minimalwert dieser zusammengesetzten Richtungsgütewerte ermittelt und die an eine Interpolationseinheit 251 eine Information über die Bildrichtung liefert, für welche der minimale zusammengesetzte Richtungsgütewert ermittelt wurde. Die Interpolationseinheit 251 ist dazu ausgebildet, unter Berücksichtigung dieser Bildrichtung, die als Interpolationsrichtung verwendet wird, einen Interpolationswert S(x,y) für den zu interpolierenden Bildpunkt 15 zu ermitteln.

Optional umfasst die Anordnung Gruppierungsanordnungen 211, 212, 213, die die Einzel-Richtungsgütewerte zu Klassengütewerten zusammenfasst. Die Akkumulationseinheit 231 ermittelt aus diesen Klassegütewerten in diesem Fall einen zusammengesetzten Klassegütewert, wobei die Minimalwertermittlungseinheit 231 den Minimalwert dieser Klassengütewerte ermittelt.

EP 1 804 492 A2

Die Minimalwertermittlungseinheit 231 gibt in diesem Fall den Wert der Klasse aus, für welche der Minimalwert ermittelt wurde. Eine der Minimalwertermittlungseinheit 231 in diesem Fall nachgeschaltete Bildrichtungsermittlungseinheit 241 ermittelt innerhalb dieser Klasse die optimale Bildrichtung, die dann als Interpolationsrichtung ausgewählt und der Interpolationseinheit 251 mitgeteilt wird.

**Patentansprüche**

1.  Verfahren zur Interpolation eines Bildinformationswertes für einen Bildpunkt (15) einer Zwischenzeile (y), mit folgenden Verfahrensschritten:

    - Auswählen einer Interpolationsrichtung (dx0) aus einer Anzahl von Bildrichtungen (dx), denen jeweils ein Richtungsgütewert (qd) zugewiesen ist, anhand eines Vergleichs dieser Richtungsgütewerte,
    - Ermitteln des zu interpolierenden Bildinformationswertes (S(x,y)) abhängig von Bildinformationswerten, die Bildpunkten zugeordnet sind, die in der Interpolationsrichtung (dx) benachbart zu dem zu interpolierenden Bildpunkt (x,y) liegen,
    und mit folgenden Verfahrensschritten zur Ermittlung eines Richtungsgütewertes (qd) für eine Bildrichtung:
    - Auswählen einer Bildpunktgruppe, die wenigstens zwei Bildpunkte umfasst,
    - Ermitteln jeweils eines Einzel-Richtungsgütewertes (q) für jeden Bildpunkt der Bildpunktgruppe, wobei der Einzel-Richtungsgütewertes (q) abhängig ist von Bildinformationswerten, die Bildbereichen zugeordnet sind, die in der Bildrichtung (dx) benachbart zu dem jeweiligen Bildpunkt der Gruppe liegen,
    - Erzeugen des Richtungsgütewertes als Funktion der Einzel-Richtungsgütewerte (q) der Bildpunktgruppe.

2.  Verfahren nach Anspruch 1, bei dem der Richtungsgütewert abhängig ist von der Summe der Einzel-Richtungsgütewerte.

3.  Verfahren zur Interpolation eines Bildinformationswertes für einen Bildpunkt (15) einer Zwischenzeile (y) eines Bildes mit mehreren Bildrichtungen, wobei das Verfahren die Verfahrensschritte umfasst:

    - Auswählen einer Bildpunktgruppe, die wenigstens zwei Bildpunkte umfasst,
    - Ermitteln jeweils eines Einzel-Richtungsgütewertes (q) für jeden Bildpunkt der Bildpunktgruppe, wobei der Einzel-Richtungsgütewertes (q) abhängig ist von Bildinformationswerten, die Bildbereichen zugeordnet sind, die in der Bildrichtung (dx) benachbart zu dem jeweiligen Bildpunkt der Gruppe liegen,
    - Bilden von Richtungsklassen, denen jeweils wenigstens eine Bildrichtung zugeordnet ist,
    - für jede der Richtungsklassen und für jeden der Bildpunkte der Bildpunktgruppe: Ermitteln eines Einzel-Klassengütewertes, der abhängig ist von den Einzel-Richtungsgütewerten des jeweils betrachteten Bildpunkts für die einzelnen Bildrichtungen der Richtungsklasse,
    - Erzeugen eines Klassengütewertes für jede Richtungsklasse aus den Einzel-Klassengütewerten, die für die jeweilige Richtungsklasse für die Bildpunkte der Bildpunktgruppe ermittelt wurden,
    - Auswählen einer Richtungsklasse anhand eines Vergleichs der Klassengütewerte,
    - Auswählen einer Bildrichtung, die der ausgewählten Richtungsklasse zugeordnet ist, als Interpolationsrichtung.

4.  Verfahren nach Anspruch 3, bei dem der Einzel-Klassengütewert abhängig ist von der Summe der Einzel-Richtungsgütewerte der Bildrichtungen der jeweiligen Richtungsklasse.

5.  Verfahren nach Anspruch 3, bei dem als Einzel-Klassengütewert einer der Einzel-Richtungsgütewerte der Bildrichtungen der jeweiligen Richtungsklasse ausgewählt wird.

6.  Verfahren nach Anspruch 3, bei dem als Einzel-Klassengütewert der Minimalwert der Einzel-Richtungsgütewerte der Bildrichtungen der jeweiligen Richtungsklasse ausgewählt wird.

7.  Verfahren nach einem der Anspruch 3 bis 6, bei dem der Klassengütewert abhängig ist von der Summe der Einzel-Klassengütewerte.

8.  Verfahren nach einem der Ansprüche 3 bis 6, bei dem als Klassengütewert einer der Einzel-Klassengütewerte ausgewählt wird.

9.  Verfahren nach Anspruch 8, bei dem als Klassengütewert der Minimalwert der Einzel-Klassengütewerte der Bildpunktgruppe ausgewählt wird.

10. Verfahren nach einem der Ansprüche 3 bis 9, bei dem eine Richtungsklasse mehrere benachbarte Bildrichtungen umfasst.

11. Verfahren nach einem der Ansprüche 3 bis 10, bei dem die Auswahl der Interpolationsrichtung aus der ausgewählten Richtungsklasse die Verfahrensschritte umfasst:

  - Vergleichen der Einzel-Richtungsgütewerte, die für den zu interpolierenden Bildpunkt für die einzelnen Bildrichtungen der ausgewählten Richtungsklasse ermittelt wurden,
  - Auswählen der Interpolationsrichtung abhängig von diesem Vergleich.

12. Verfahren nach Anspruch 11, bei dem das Minimum der Einzel-Richtungsgütewerte ermittelt wird und bei dem die Bildrichtung als Interpolationsrichtung ausgewählt wird, für die das Minimum ermittelt wurde.

13. Verfahren nach einem der Ansprüche 3 bis 10, bei dem zu jeder Bildrichtung der ausgewählten Richtungsklasse ein Richtungskorrelationswert ermittelt wird und bei dem die Interpolationsrichtung anhand eines Vergleichs dieser Richtungskorrelationswerte aus den Bildrichtungen dieser ausgewählten Richtungsklasse ausgewählt wird.

14. Verfahren nach einem der vorangehenden Ansprüche, bei dem die Gruppe von Bildpunkten den zu interpolierenden Bildpunkt. (15) umfasst.

15. Verfahren nach einem der vorangehenden Ansprüche, bei dem die Gruppe von Bildpunkten wenigstens einen Bildpunkt aus der zu interpolierenden Zwischenzeile und wenigstens einen Bildpunkt aus einer weiteren zu interpolierenden Zwischenzeile umfasst.

16. Verfahren nach einem der vorangehenden Ansprüche, bei dem die Bildpunktgruppe abhängig von der jeweiligen Bildrichtung ausgewählt wird.

17. Verfahren nach Anspruch 16, bei dem für eine erste Bildrichtung eine erste Bildpunktgruppe und für eine zweite Bildrichtung eine zweite Bildpunktgruppe ausgewählt wird.

18. Verfahren nach einem der vorangehenden Ansprüche, bei dem jeder der Bildbereiche, die für die Ermittlung eines Einzel-Richtungsgütewertes herangezogen werden, wenigstens zwei Bildpunkte umfasst, die in einer Zeile benachbart zueinander angeordnet sind.

19. Verfahren nach einem der vorangehenden Ansprüche, bei dem für jede Bildrichtung ein Richtungskorrelationswert (dm) ermittelt wird, der abhängig ist von der Differenz der Bildinformationswerte wenigstens zweier Bildpunkte, die in der Bildrichtung benachbart zu dem zu interpolierenden Bildpunkt (x,y) liegen und
bei dem der Einzel-Richtungsgütewert abhängig ist von dem Richtungskorrelationswert.

20. Verfahren nach einem der vorangehenden Ansprüche,
bei dem zu jeder Bildrichtung ein Vertikalkorrelationswert (mv) ermittelt wird, der abhängig ist von einer Korrelation zwischen dem Richtungskorrelationswert der jeweiligen Bildrichtung und dem Richtungskorrelationswert für eine vertikale Richtung und
bei dem der Einzel-Richtungsgütewert abhängig ist von dem Vertikalkorrelationswert.

21. Verfahren nach einem der vorangehenden Ansprüche, bei dem in wenigstens einer oberen Bildzeile, die oberhalb der zu interpolierenden Bildzeile angeordnet ist, und in wenigstens einer unteren Bildzeile (y-1, y+1), die unterhalb der zu interpolierenden Bildzeile (y) angeordnet ist, der Verlauf der Bildinformationswerte innerhalb der jeweiligen Zeile (y-1, y+1) ermittelt wird und bei dem der Einzel-Richtungsgütewert abhängig ist von dem Verlauf der Bildinformationswerte innerhalb dieser Zeilen.

22. Verfahren nach Anspruch 20 und 21, bei dem der Vertikalkorrelationswert (mv) zu Null gesetzt wird, wenn die Bildinformationswerte in der unteren und oberen Bildzeile im Bereich der Position des zu interpolierenden Bildpunktes in entgegengesetzten Richtungen über mehr als eine vorgegebene Anzahl von Bildpunkten monoton zunehmen oder abnehmen.

**23.** Vorrichtung zur Interpolation eines Bildinformationswertes für einen Bildpunkt (15) einer Zwischenzeile (y), die aufweist:

- Mittel zum Auswählen einer Interpolationsrichtung (dx0) aus einer Anzahl von Bildrichtungen (dx), denen jeweils ein Richtungsgütewert (qd) zugewiesen ist, anhand eines Vergleichs dieser Richtungsgütewerte,
- Mittel zum Ermitteln des zu interpolierenden Bildinformationswertes (S(x,y)) abhängig von Bildinformationswerten, die Bildpunkten zugeordnet sind, die in der Interpolationsrichtung (dx) benachbart zu dem zu interpolierenden Bildpunkt (x,y) liegen,
und die zur Ermittlung eines Richtungsgütewertes (qd) für eine Bildrichtung aufweist:
- Mittel zum Auswählen einer Bildpunktgruppe, die wenigstens zwei Bildpunkte umfasst,
- Mittel zum Ermitteln jeweils eines Einzel-Richtungsgütewertes (q) für jeden Bildpunkt der Bildpunktgruppe, wobei der Einzel-Richtungsgütewertes (q) abhängig ist von Bildinformationswerten, die Bildbereichen zugeordnet sind, die in der Bildrichtung (dx) benachbart zu dem jeweiligen Bildpunkt der Gruppe liegen,
- Mittel zum Erzeugen des Richtungsgütewertes als Funktion der Einzel-Richtungsgütewerte (q) der Bildpunktgruppe.

**24.** Vorrichtung zur Interpolation eines Bildinformationswertes für einen Bildpunkt (15) einer Zwischenzeile (y) eines Bildes mit mehreren Bildrichtungen, die aufweist:

- Mittel zum Auswählen einer Bildpunktgruppe, die wenigstens zwei Bildpunkte umfasst,
- Mittel zum Ermitteln jeweils eines Einzel-Richtungsgütewertes (q) für jeden Bildpunkt der Bildpunktgruppe, wobei der Einzel-Richtungsgütewertes (q) abhängig ist von Bildinformationswerten, die Bildbereichen zugeordnet sind, die in der Bildrichtung (dx) benachbart zu dem jeweiligen Bildpunkt der Gruppe liegen,
- Mittel zum Bilden von Richtungsklassen, denen jeweils wenigstens eine Bildrichtung zugeordnet ist,
- Mittel zum Ermitteln eines Einzel-Klassengütewertes, der abhängig ist von den Einzel-Richtungsgütewerten des jeweils betrachteten Bildpunkts für die einzelnen Bildrichtungen der Richtungsklasse, für jede der Richtungsklassen und für jeden der Bildpunkte der Bildpunktgruppe,
- Mittel zum Erzeugen eines Klassengütewertes für jede Richtungsklasse aus den Einzel-Klassengütewerten, die für die jeweilige Richtungsklasse für die Bildpunkte der Bildpunktgruppe ermittelt wurden,
- Mittel zum Auswählen einer Richtungsklasse anhand eines Vergleichs der Klassengütewerte,
- Mittel zum Auswählen einer Bildrichtung, die der ausgewählten Richtungsklasse zugeordnet ist, als Interpolationsrichtung.

## FIG 1

## FIG 2

## FIG 3

## FIG 4

FIG 5A

dx=-7 ... -4
dx=4 ... 7

FIG 5B

dx=-3, -2
dx=2, 3

FIG 5C

dx=-1, 0, 1

## FIG 6

## FIG 7

## FIG 8

## FIG 9

FIG 10

EP 1 804 492 A2

## FIG 11

Klasse 0 | -7 | -6 | -5 | -4 |

Klasse 1 | -3 | -2 |

Klasse 2 | -1 |

Klasse 3 | 0 |

Klasse 4 | 1 |

Klasse 5 | 2 | 3 |

Klasse 6 | 4 | 5 | 6 | 7 |

## FIG 12

Q [c]

0   1   2   3   4   5   6   Klasse

FIG 13

S(x,y)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5625421 A, Faroudja
- US 6965705 B1
- EP 0550231 A1
- US 20050157951 A1
- WO 9919834 A1
- US 20050134602 A1

**In der Beschreibung aufgeführte Nicht-Patentliteratur**

- **T. DOYLE.** Interlaced to Sequential Conversion for EDTV Applications. *Proc. of 2nd Int. Workshop on Signal Processing of HDTV,* 1988
- **T. DOYLE ; M LOOYMANS.** Progressive Scan Conversion Using Edge Information. *Proc. of 3rd Int. Workshop on HDTV,* 1989
- **LEE et al.** A new Algorithm for interlaced to progressive scan conversion based on directional correlations and its IC design. *IEEE Transactions on Consumer Electronics,* Mai 1994, vol. 40 (2
- **FAN ; YU-CHENG.** Intellegent Intra-Field Interpolation for Motion Compensated Deinterlacing. *3rd International Conference on Information Technology ITRE 2005,* Juni 2005, vol. 27.-30, 200-203